# EUROPEAN PATENT APPLICATION

(11) **EP 1 450 552 A2**
(43) Date of publication of application: **25.08.2004**
(21) Application number: 04003499.3
(22) Date of filing: 17.02.2004
(51) Int. Cl.: H04N 1/60

(54) **Data conversion apparatus and data conversion program storage medium**

(30) Priority: 18.02.2003 JP 2003039883; 26.12.2003 JP 2003433176
(71) Applicant: Fuji Photo Film Co. Ltd., Kanagawa 250-0193 (JP)
(72) Inventor: Watanabe, Akira c/o Fuji Photo Film Co. Ltd., Kanagawa 258-8538 (JP); Kawakami, Shigekic/o Fuji Photo Film Co. Ltd., Kanagawa 258-8538 (JP); Nakao, Mitsuru c/o Fuji Photo Film Co. Ltd., Kanagawa 258-8538 (JP); Takamori, Tetsuya c/o Fuji Photo Film Co. Ltd., Kanagawa 258-8538 (JP)
(74) Representative: Klunker . Schmitt-Nilson . Hirsch

(57) **Abstract**

A data conversion apparatus comprises an image recognition section for recognizing individual images in a page represented by page description language, an image analyzing section performing an image analysis to extract the features on the individual images recognized by the image recognition section, and an image correction section that applies an image correction processing according to an analysis result analyzed by the image analyzing section to an associated image of the page.

## Description

### BACKGROUND OF THE INVENTION

### Field of the Invention

The present invention relates to a data conversion apparatus for converting page description language representative of a page including an image and a character into dot type of raster data, and a data conversion program storage medium storing a data conversion program which causes a computer to operate as the data conversion apparatus when the data conversion program is incorporated into the computer and is executed therein.

### Description of the Related Art

Hitherto, in a field of printing, DTP (Desktop Publishing), in which a computer is utilizing to perform works of editing, is widely applied. The DTP implements an idea of WYSIWYG (What You See Is What You Get). An operator performs editing for characters and images while looking a display screen, so that the operator can perform printing and plate making the images and the like using a printer and an image setter upon confirmation of an image of the printed matter.

In the DTP, software, which is used when an operator edits characters and images, is generally referred to as DTP software. The DTP software creates data of a type referred to as page description language representative of an image every page in accordance with characters and images edited by an operator. The page description language cannot be outputted directly by an output device such as a printer, and thus a RIP (Raster Image Processor) is used to convert the page description language into raster data capable of being outputted by the output device, so that the output device outputs an output image in accordance with the raster data.

By the way, as digital cameras have come into wide use, it is widely performed that a photographic image taken by a digital camera is used as an image for printing. It may happen that the photographic image brings about such inconvenience that for example, the photographic image taken against the sun is too white in its entirety. In this case, retouch software for correcting an image is used to apply color correction for every photographic image. While it needs a sophisticated technique that a mouse and the like is used to manually correct a color of an image, recently, there is known a retouch software provided with an automatic setup function in which qualities of colors of images, such as tone of colors, are analyzed, and a color correction processing according to the qualities is automatically applied to the image (cf. for example, Japanese Patent Application Laid Open Gazette TokuKai Hei. 2-105676). An operator may use the automatic setup function of the retouch software to readily apply a color correction processing to an image, and the operator may use the DTP software to paste the image applied to the color correction processing, of which color is nice to look at, onto a page represented by the page description language.

However, in a case where a large number of photographic images is used as an image for printing, it is a very complicated work and takes much time that an organization starts retouch software to apply a color correction processing to the respective photographic images, and the images are pasted on a page, even if the above-mentioned automatic setup is utilized.

Such troublesomeness particularly involves a problem when a printer for printing, which is referred to as an on-demand printer, is connected to the RIP to create the printed matter. The on-demand printer needs no work for plate making different from a printing machine, and thus it is possible to greatly reduce the printing cost and the processing time for output of images. Accordingly, recently, the on-demand printer is widely used for creating business documents and the like. The printed matter, which is created by the on-demand printer, does not need strict image quality as compared with the printed matter, which is created through a large-scale work by the printing machine. Thus, it is strongly desired that a series of editing works including the above-mentioned color correction processing is simply carried out without much time. On the other hand, such a desire that a photographic image taken by a digital camera is pasted onto a business document is enhanced, and thus it is desired that the above-mentioned complicated work is reduced.

### SUMMARY OF THE INVENTION

In view of the foregoing, it is an object of the present invention to provide a data conversion apparatus capable of reducing a deal of time for creating an output image including an image subjected to an image correction processing such as a color correction processing, and a data conversion program storage medium storing a data conversion program which causes a computer to operate as the data conversion apparatus when the data conversion program is incorporated into the computer and is executed therein.

To achieve the above-mentioned object, the present invention provides a data conversion apparatus comprising:
an image recognition section that recognizes individual images in a page represented by page description language describing the page including images, characters, and figures;
an image analyzing section that performs an image analysis to extract features on individual images recognized by the image recognition section; and
an image correction section that applies an image correction processing'according to an analysis result analyzed by the image analyzing section to an associated image of the page.

According to the data conversion apparatus of the present invention, images before correction included in a page are recognized, a predetermined image analysis is carried out on the respective recognized image, and an image correction processing is applied to the respective recognized image in accordance with the analyzed result. For example, the data conversion apparatus of the present invention is applied to a so-called RIP. Provision of such a function that images included in a page are individually analyzed and image correction processing suitable for the respective image is applied to the image, on the RIP, makes it possible to simplify a series of processing of creating a page including images subjected to the image correction processing such as color correction processing, and whereby the processing can be carried out at high speed.

In the data conversion apparatus according to the present invention as mentioned above, it is acceptable that the data conversion apparatus further comprises an after correction-data creating section that creates raster data representative of the page of which images are subjected to the image correction processing.

The data conversion apparatus having the after correction-data creating section is readily applicable to the RIP.

In the data conversion apparatus according to the present invention as mentioned above, it is preferable that the data conversion apparatus further comprises:
a processing designation section that selectively designates whether the image correction processing is carried out; and
a non-correction data creating section that creates raster data representative of the page represented by the page description language, instead of a series of processing by the image analyzing section, the image correction section, and the after correction-data creating section, in the event that the processing designation section designates that the image correction processing is not carried out.

For example, with respect to a page constituted of images subjected to the image correction processing, there is no need to apply the image correction processing to images included in the page, and it is preferable to select whether the image correction processing is executed.

In the data conversion apparatus according to the present invention as mentioned above, it is preferable that the image analyzing section analyzes characteristics as to colors on the individual images recognized by the image recognition section, and
the image correction section applies a color correction processing according to the characteristics analyzed by the image analyzing section to an associated image of the page.

For example, for photograph, it is known that there are colors nice to look at that are preferable for a large majority of persons. According to the data conversion apparatus as mentioned above, the images included in the page are individually analyzed and are subjected to the color correction processing suitable for the respective images. This feature makes it possible to correct colors of the images included in the page to colors nice to look at as mentioned above, for instance.

In the data conversion apparatus according to the present invention as mentioned above, it is acceptable that the image analyzing section analyzes, as the characteristics as to colors, characteristics of tones of colors of images, and
the image correction section applies a tone correction processing according to the characteristics analyzed by the image analyzing section to an image.

In the data conversion apparatus according to the present invention as mentioned above, it is acceptable that the image analyzing section performs a scene analysis to recognize the 'situation' and/or 'intention' of the images on the individual images recognized by the image recognition section, and
the image correction section applies an image correction processing by converting an image to the most suitable form according to the 'situation' and/or 'intention' recognized by the image analyzing section to images of the 'situation' and/or 'intention' in the page on the individual images recognized by the image recognition section.

In the data conversion apparatus according to the present invention as mentioned above, it is preferable that the image analyzing section detects a predetermined inconvenience on the individual images recognized by the image recognition section, and
the image correction section applies an image correction processing for correcting the inconvenience detected by the image analyzing section to images involved in the inconvenience in the page on the individual images recognized by the image recognition section.

To achieve the above-mentioned object, the present invention provides a data conversion program storage medium storing a data conversion program which causes a computer to operate as a data conversion apparatus, when the data conversion program is incorporated into the computer, the data conversion apparatus comprising:
an image recognition section that recognizes images of a page represented by page description language describing the page including images and/or characters;
an image analyzing section that performs a predetermined image analysis on individual images recognized by the image recognition section; and
an image correction section that applies an image correction processing according to an analysis result analyzed by the image analyzing section to an associated image of the page.

The data conversion program stored in the data conversion program storage medium of the present invention includes all the aspects corresponding to the aspects of the data conversion apparatus.

### BRIEF DESCRIPTION OF THE DRAWINGS

Fig. 1 is a structural view of an image processing system to which an embodiment of the present invention is applied.
Fig. 2 is a perspective view of a personal computer.
Fig. 3 is a hardware structural view of the personal computer.
Fig. 4 is a conceptual view showing a CD-ROM 410 storing a first embodiment of a data conversion program stored in a data conversion program storage medium of the present invention.
Fig. 5 is a functional block diagram of the RIP as a first embodiment of a data conversion apparatus of the present invention.
Fig. 6 is an illustration showing a page edited by an operator.
Fig. 7 is a flowchart useful for understanding a series of processing to be carried out by the RIP.
Fig. 8 is a view showing a display screen displaying a set up image plane.
Fig. 9 is a conceptual view showing the CD-ROM 410 storing a second embodiment of a data conversion program stored in a data conversion program storage medium of the present invention.
Fig. 10 is a functional block diagram of a second embodiment of a data conversion apparatus of the present invention.

### DETAILED DESCRIPTION OF PREFERRED EMBODIMENTS

Embodiments of the present invention will be described with reference to the accompanying drawings.

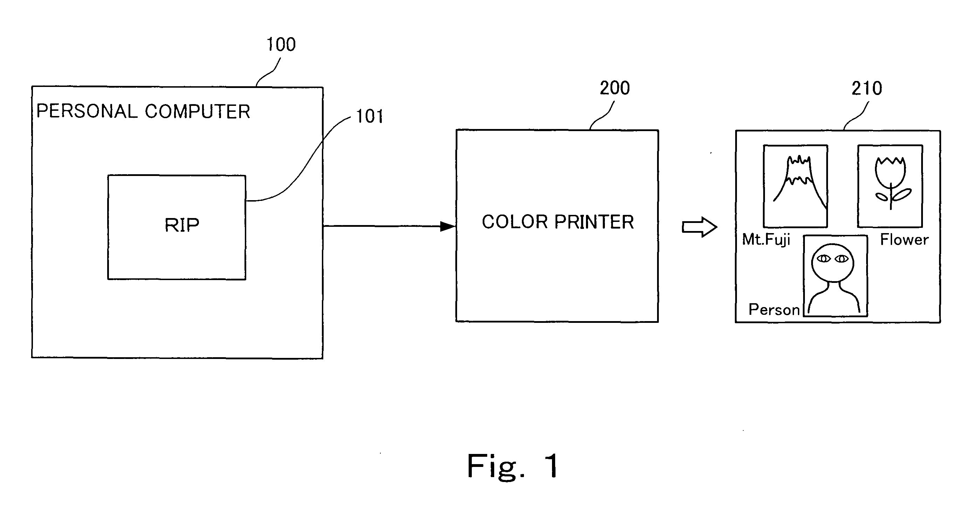

Fig. 1 is a structural view of an image processing system to which an embodiment of the present invention is applied. The image processing system adopts a DTP for creating a printed matter using a computer, in which a color printer 200 outputs a page including characters and images edited by an operator using a personal computer 100.

The personal computer 100 receives image data created through reading an original image by a color scanner (not illustrated) and image data according to a photographic image taken by a digital camera (not illustrated).

In the personal computer 100, an operator edits on an electronic basis a page including an image in accordance with characters and entered image data, so that page description language representative of the edited page is created. The page description language is language data described in a so-called PDL (Page Description Language), and thus the color printer 200 cannot output the page description language in the present form. Accordingly, the page description language is fed to a RIP 101 so as to be converted into raster data which is capable of being outputted by the color printer 200. The raster data after the conversion is fed to the color printer 200 to create an output image 210 in accordance with the raster data.

An aspect of an embodiment of the present invention in the image processing system shown in Fig. 1 resides in the processing contents to be executed in the RIP 101 of the personal computer 100. Hereinafter, there will be explained the personal computer 100 having the RIP 101.

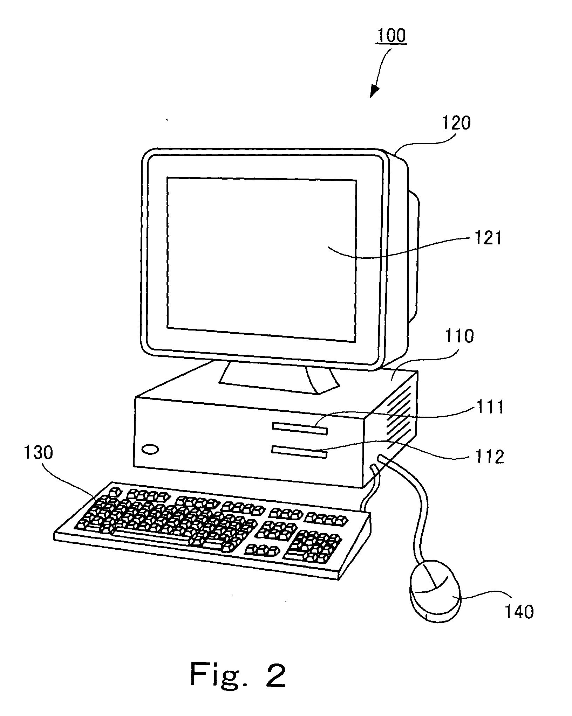

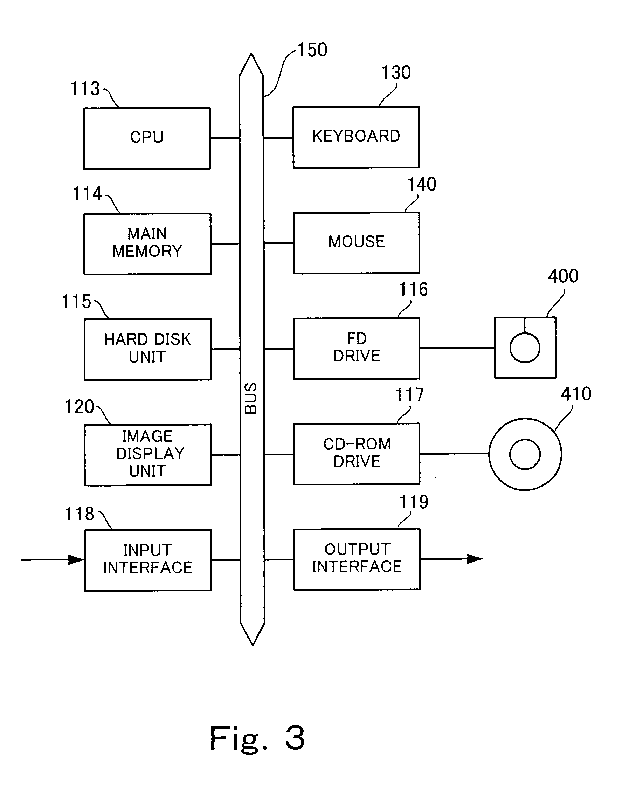

Fig. 2 is a perspective view of the personal computer 100 shown in Fig. 1. Fig. 3 is a hardware structural view of the personal computer.

The personal computer 100 comprises, on an external appearance, a main frame unit 110, an image display unit 120 for displaying an image on a display screen 121 in accordance with an instruction from the main frame unit 110, a keyboard 130 for inputting various sorts of information to the main frame unit 110 in accordance with a key operation, and a mouse 140 for inputting an instruction according to, for example, an icon and the like, through designation of an optional position on the display screen 121, the icon and the like being displayed on the position on the display screen 121. The main frame unit 110 has a flexible disk (FD) mounting slot 111 for mounting a flexible disk (FD), and a CD-ROM mounting slot 112 for mounting a CD-ROM.

The main frame unit 301 comprises, as shown in Fig. 3, a CPU 113 for executing a various types of program, a main memory 114 in which a program stored in a hard disk unit 115 is read out and developed for execution by the CPU 113, the hard disk unit 115 for saving various types of programs and data, an FD drive 116 for accessing a flexible disk 400 mounted thereon, a CD-ROM drive 117 for accessing a CD-ROM 410 mounted thereon, an input interface 118 for receiving image data from a color scanner (not illustrated) and a digital camera (not illustrated), and an output interface 119 for outputting raster data after editing to the color printer 200 shown in Fig. 1. These various types of elements are connected via a bus 150 to the image display unit 120, the keyboard 130 and the mouse 140.

The CD-ROM 410 stores therein a data conversion program according to an embodiment of the present invention, which causes the personal computer 100 to operate as the RIP 101. The CD-ROM 410 is mounted on the CD-ROM drive 117 so that the data conversion program, which is stored in the CD-ROM 410, is up-loaded on the personal computer 100 and is stored in the hard disk unit 115. When the data conversion program is executed on the personal computer 100, the personal computer 100 serves as the RIP 101 to which the embodiment of the data conversion apparatus of the present invention is applied.

Next, there will be explained the data conversion program for creating the RIP 101 shown in Fig. 1 to which the embodiment of the data conversion apparatus of the present invention is applied.

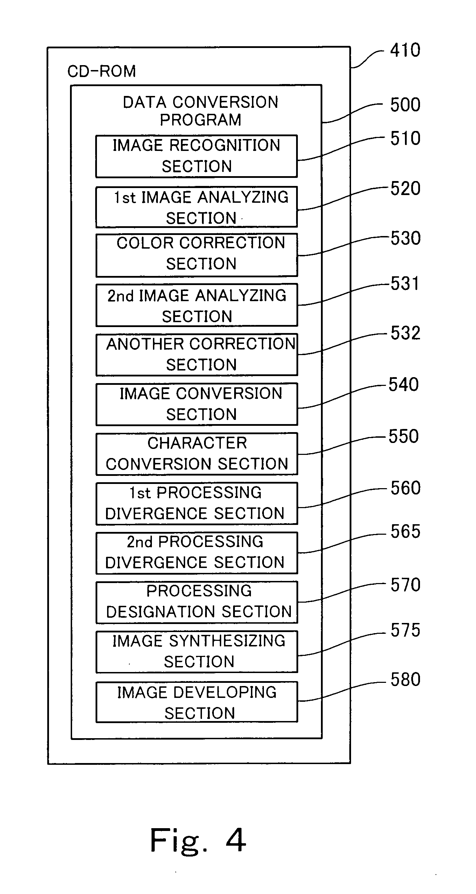

Fig. 4 is a conceptual view showing the CD-ROM 410 storing a first embodiment of a data conversion program stored in a data conversion program storage medium of the present invention.

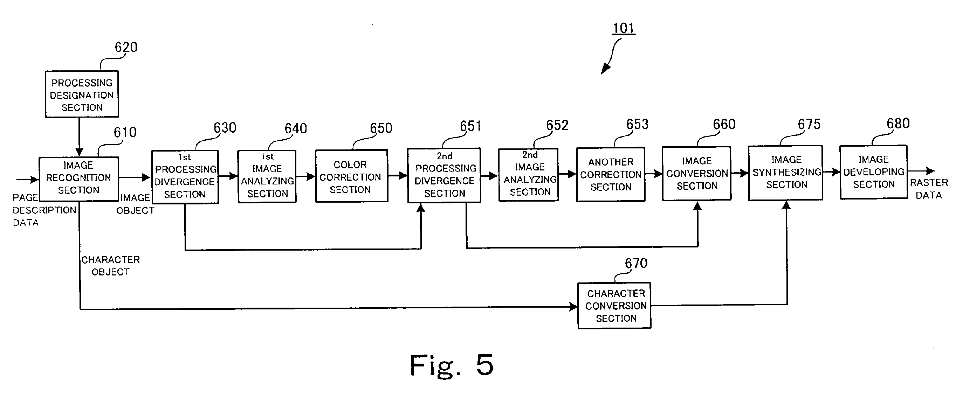

A first data conversion program 500 stored in the CD-ROM 410 comprises: an image recognition section 510; a first image analyzing section 520; a color correction section 530; a second image analyzing section 531; another correction section 532; an image conversion section 540; a character conversion section 550; a first processing divergence section 560; a second processing divergence section 565; a processing designation section 570; an image synthesizing section 575; and an image developing section 580. The image recognition section 510 corresponds to an example of the image recognition section in the data conversion program of the present invention. Likely, the combination of the first image analyzing section 520 and the second image analyzing section 531 corresponds to an example of the image analyzing section. The combination of the color correction section 530 and the another correction section 532 corresponds to an example of the image correction section. The processing designation section 570 corresponds to an example of the processing designation section. The image developing section 580 corresponds to an example of the after correction-data creating section. The combination of the image developing section 580, the first processing divergence section 560, and the second processing divergence section 565 corresponds to an example of the non correction-data creating section. Details of the respective sections of the first data conversion program 500 will be explained in conjunction with the functions of the respective sections of the RIP 101 which the first embodiment of a data conversion apparatus of the present invention as shown in Fig. 1 and Fig. 5 is applied to.

Fig. 5 is a functional block diagram of the RIP 101 as a first embodiment of a data conversion apparatus of the present invention, in which the first data conversion program 500 is installed into the personal computer 100 shown in Fig. 1, and the personal computer 100 serves as the first embodiment of a data conversion apparatus of the present invention. Hereinafter, there will be explained the structural elements and the function of the structural elements.

The RIP 101 also shown in Fig. 1 comprises: an image recognition section 610; a processing designation section 620; a first processing divergence section 630; a first image analyzing section 640; a color correction section 650; a second processing divergence section 651; a second image analyzing section 652; another correction section 653; an image conversion section 660; a character conversion section 670; an image synthesizing section 675; and an image developing section 680. When the first data conversion program 500 shown in Fig. 4 is installed into the personal computer 100 shown in Fig. 1 to Fig. 3, the image recognition section 510 of the first data conversion program 500 constitutes the image recognition section 610 of Fig. 5. Likely, the processing designation section 570 constitutes the processing designation section 620; the first processing divergence section 560 constitutes the first processing divergence section 630; the first image analyzing section 520 constitutes the first image analyzing section 640; the color correction section 530 constitutes the color correction section 650; the second processing divergence section 565 constitutes the second processing divergence section 651; the second image analyzing section 531 constitutes the second image analyzing section 652; the another correction section 532 constitutes the another correction section 653; the image conversion section 540 constitutes the image conversion section 660; the character conversion section 550 constitutes the character conversion section 670; the image synthesizing section 575 constitutes the image synthesizing section 675; and the image developing section 580 constitutes the image developing section 680.

The image recognition section 610 receives page description language representative of a page edited by an operator. In the page description language, images included in a page are dealt with in form of a block of an image object, and characters in a page are dealt with in form of a block of a character object. The image recognition section 610 recognizes the image object and the character object included in the page represented by the entered page description language. Further, the image recognition section 610 obtains from the processing designation section 620 designation of a profile used in processing of the respective element in Fig. 5, and designation of processing to be applied to the image object and the character object. The image recognition section 610 corresponds to an example of the image recognition section in the data conversion apparatus of the present invention. The image object, which is recognized by the image recognition section 610, is transmitted to the first processing divergence section 630, while the character object is transmitted to the character conversion section 670. The respective designation contents transmitted from the processing designation section 620 are transmitted to the first processing divergence section 630 and the character conversion section 670.

The mouse 140 and the keyboard 130 shown in Fig. 2 are serves as the processing designation section 620. When an operator uses the mouse 140 and the keyboard 130 to designate a profile to be used in the processing for the respective element in Fig. 5 and a sort of processing for the respective element in accordance with the previously prepared set-up screen, the processing designation section 620 transmits those designation contents to the image recognition section 610. According to the present embodiment, the use of the set-up screen makes it possible to designate an image-use profile for converting image data representative of an image object into image data for a color space to meet the color printer 200 in Fig. 1, which is used in the image conversion section 660; a character-use profile for converting character-use data of a character object into character-use data for a color space to meet the color printer 200, which is used in the character conversion section 670; and a printer and paper-use profile for converting page description language representative of a page into raster data to meet the color printer 200 and paper, which is used in the image developing section 680. Further, according to the present embodiment, with respect to a sort of the processing as to colors in the respective elements, as the processing for the image object, it is possible to designate any one of "processing for a preferable color" for converting a color of the image object to meet a color be nice to look at, "processing for faithfulness to look at" for reproducing a color of the image object to be a color that sensuously looks like the original color, and "colorimetric processing" for faithfully reproducing a colorimetric value so that the white point is expressed in form of the white point regardless of a color of paper onto which the page is outputted, and as the processing for the character object, it is possible to designate any one of "processing for a preferable color" for converting a color of the character object to maintain chroma saturation, and "colorimetric processing" for faithfully reproducing a colorimetric value so that the white point is expressed in form of the white point regardless of a color of paper onto which the page is outputted. Further, according to the present embodiment, as the processing for the image object, there are raised "hyper white balance" which corrects white points by estimating a light source based on the color of a face extracted from an image; "hyper tone processing" which automatically performs density adjustments for high contrast or overlay backlit scenes; "hyper sharpness processing" which creates crisper images with improved edge definition of objects, shadows and colors; "red eye reduction processing" in which in the event that eyes of a person image photographed through a flash photography are of red, the color of the eyes is corrected; "flaw erasing processing" in which flaw in the image object is corrected; "lens aberration correction processing" in which aberration due to the characteristic of an image taking lens is corrected. The processing designation section 620 is able to designate whether those processing are to be executed. Particularly, as to the above-mentioned "hyper tone processing", "hyper sharpness processing" and "red eye reduction processing", it is possible to designate levels of their processing. As to the above-mentioned "lens aberration correction processing", in the event that execution of the processing is designated, the lens characteristic used in the processing is inputted. The input of the lens characteristic is executed in such a manner that an operator selects a name of the image taking lens used in photography from among names of a plurality of image taking lenses displayed on a set-up image plane. The processing designation section 620 corresponds to an example of the processing designation section of the data conversion apparatus of the present invention.

The first processing divergence section 630 transmits the image object transmitted from the image recognition section 610 to the first image analyzing section 640 in the event that the designation of the processing as to the color is the above-mentioned "processing for a preferable color", of the designations of the processing to be applied to the image object transmitted from the image recognition section 610. And in the event that the designation of the processing as to the color is the processing ("processing for faithfulness to look at" and "colorimetric processing") other than the above-mentioned "processing for a preferable color", the first processing divergence section 630 transmits the image object transmitted from the image recognition section 610 to the second image analyzing section 651. The designation of the "processing for a preferable color" corresponds to an example of the "designation of execution of image correction processing" referred to in the present invention. The "processing for faithfulness to look at" and the "colorimetric processing" correspond to an example of the "designation of non-execution of image correction processing" referred to in the present invention. The designation contents, which are designated by the processing designation section 620 and transmitted from the image recognition section 610, are transmitted to the color correction section 650, the second processing divergence section 651, the another correction section 653, and the image conversion section 660.

The first image analyzing section 640 analyzes qualities of tones of colors every image object transmitted from the first processing divergence section 630, and also analyzes scene of the image object. The image object and the analyzed result are transmitted to the color correction section 650, and the analyzed result is transmitted to the image conversion section 660 as well.

The color correction section 650 applies a color tone correction processing to an image object transmitted from the first image analyzing section 640 in accordance with properties of tones of colors of the image object and the scene of the image object. The image object subjected to the tone correction processing is transmitted to the second processing divergence section 651.

The second processing divergence section 651 determines whether execution of processing for the "red eye reduction processing", the "flaw erasing processing", the "hyper tone processing", the "hyper sharpness processing" and the "lens aberration correction processing", of the processing to be applied to the image object transmitted from the image recognition section 610, is designated. The second processing divergence section 651 transmits the image object transmitted from the color correction section 650 and the designation contents of processing to the second image analyzing section 652, in the event that the execution of at least one of those types of processing is designated, and transmits the image object to the image conversion section 660, in the event that non-execution is designated for all types of processing.

The second image analyzing section 652 detects the red eye phenomenon in the image object in the event that the execution of the "red eye reduction processing" is designated, in the designation contents of the processing transmitted from the second processing divergence section 651, and detects the flaw in the image object in the event that the execution of the "flaw erasing processing" is designated. Detection results of the red eye phenomenon in the image object and the flaw are transmitted to the another correction section 653.

The another correction section 653 applies the processing designated in execution of the "red eye reduction processing", the "flaw erasing processing", the "hyper tone processing", the "hyper sharpness processing" and the "lens aberration correction processing" to the image object transmitted from the second image analyzing section 652. The "red eye reduction processing" and the "flaw erasing processing" are executed in accordance with the detection results of the red phenomenon and flaw detected by the second image analyzing section 652. The "red eye reduction processing", the "hyper tone processing", and the "hyper sharpness processing" are executed in accordance with the level of the processing designated by the processing designation section 620. The "lens aberration correction processing" is executed in accordance with the lens qualities entered through the processing designation section 620 by an operator. The image object subjected to those types of correction processing is transmitted to the image conversion section 660.

The image conversion section 660 obtains an image object from the another correction section 653 or the second processing divergence section 651, and obtains a result of scene analysis from the second image analyzing section 652. The image conversion section 660 applies a processing to the obtained image object in accordance with the designation of the processing ("processing for a preferable color", "processing for faithfulness to look at", and "colorimetric processing") transmitted from the image recognition section 610. In the event that the designation of the processing is concerned with the "processing for a preferable color", the image conversion section 660 corrects the color of the image object into a preferable color according to the scene, for example, a landscape and a person. Further, the image conversion section 660 uses the profile for image use of the designation contents transmitted from the image recognition section 610 to convert image data representative of the image object into image data of a color space to meet the color printer 200 in Fig. 1. The image object based on the converted image data is transmitted to the image synthesizing section 675.

The character conversion section 670 obtains a character object and designation contents from the image recognition section 610 and applies a processing according to the designation of processing ("processing for a preferable color" and "colorimetric processing") to the obtained character object. Further, the character conversion section 670 uses the profile for character use of the designation contents to convert character data representative of the character object into character data for a color space to meet the color printer 200 in Fig. 1. The character object based on the character data thus converted is transmitted to the image synthesizing section 675.

The image synthesizing section 675 obtains the image object and the character object from the image conversion section 660 and the character conversion section 670, respectively, and generates page description language representative of a page constituted of those two types of objects. The thus generated page description language is transmitted to the image developing section 680.

The image developing section 680 obtains the page description language and the designation contents from the image synthesizing section 675 and the image recognition section 610, respectively, and uses the printer and paper-use profile to generate raster data representative of a page represented by the page description language thus obtained. The thus generated raster data is transmitted via the output interface 119 shown in Fig. 2 to the color printer 200 shown in Fig. 1.

The RIP 101 is basically constructed as mentioned above, and next there will be explained the procedure of the creation of the output image 210 shown in Fig. 1 using the personal computer 100.

Photographic image data, which is obtained through photography of the subject by the digital camera, and image data, which is obtained through reading of the original image by a color scanner, are fed via the input interface 118 in Fig. 3 to the personal computer 100 and are stored in the hard disk unit 115.

An operator uses the keyboard 130 and the mouse 140 to edit characters and pages including images stored in the hard disk unit 115.

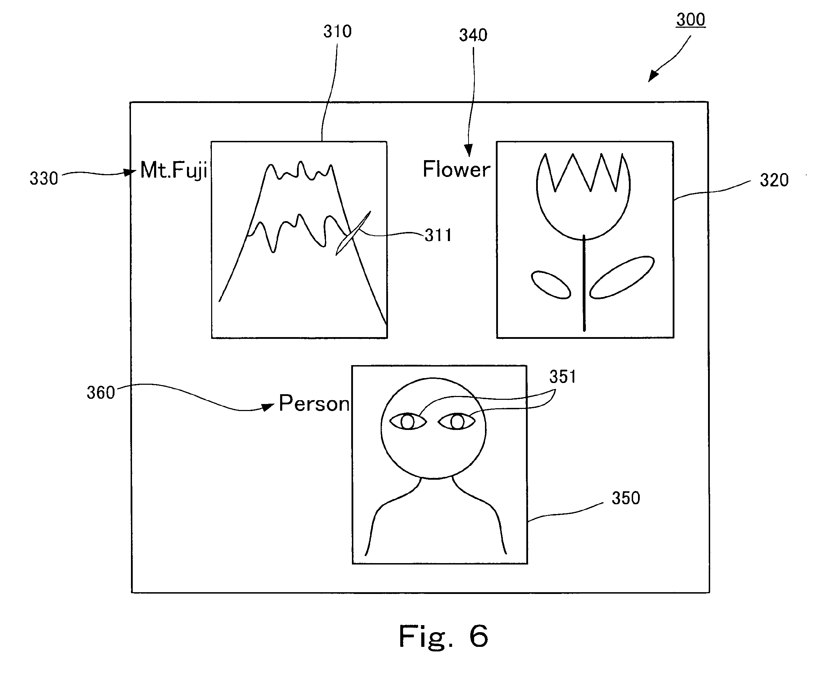

Fig. 6 is an illustration showing a page edited by an operator. Page 300 shows image objects 310, 320 and 350 based on photographic image data, and character objects 330, 340 and 360 edited by an operator. Here, there will be explained the present embodiment assuming that the image objects 310, 320 and 350 have the following aspects. First, the image object 310 is a whitish image in its entirety because it is photographed into the sun, and the image object 310 has a flaw 311. The image object 320 is an image inclining to orange in its entirety because it is photographed under the setting sun. The image object 350 is an image obtained through the flash photography in which eyes 351 of a person in the image are photographed with red reflecting a flashlight.

When an operator edits the page 300, the operator clicks an icon (not illustrated) to activate the RIP 101 shown in Fig. 5.

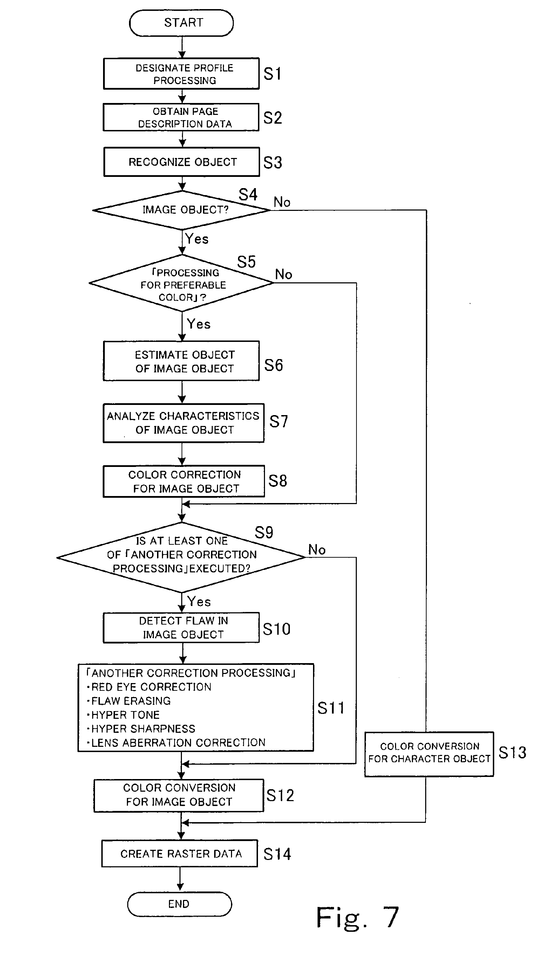

Fig. 7 is a flowchart useful for understanding a series of processing to be carried out by the RIP 101 when the output image 210 is created. Hereinafter, there will be explained in detail processing to be carried out by the RIP 101.

In a step S1 in Fig. 7, there are designated profiles used in the respective elements in Fig. 5 and the processing to be effected in the respective elements in Fig. 5. When an operator activates the RIP 101, a set-up image plane, which is previously prepared, is displayed on the display screen 121 in Fig. 2.

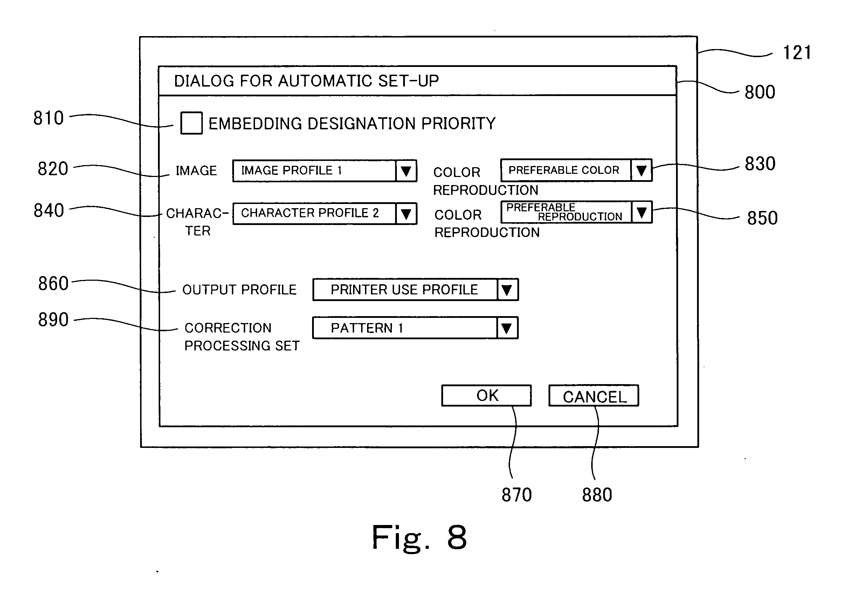

Fig. 8 is a view showing a display screen displaying a set-up image plane. A set-up image plane 800 is provided with an embedding profile designation section 810 for designating a matter that when a profile is added to an image object, which is referred to as an additional profile, the additional profile is used as the image use profile; an image use profile designation section 820 for selecting an image use profile from among the profiles prepared beforehand; an image object use color processing designation section 830 for selecting a color processing ("processing for a preferable color", "processing for faithfulness to look at", and "colorimetric processing") to be applied to an image object; a character use profile designation section 840 for selecting a character use profile from among the profiles prepared beforehand; a character object use color processing designation section 850 for selecting a color processing ("processing for a preferable color", and "colorimetric processing") to be applied to a character object; a printer and paper-use profile 860 for selecting a printer and paper-use profile from among the profiles prepared beforehand; and a correction processing set up section 890 for establishing combinations of existences of execution a correction processing ("red eye reduction processing", "flaw erasing processing", "hyper tone processing", "hyper sharpness processing", and "lens aberration correction processing") to be applied to the image object and processing levels in such a manner that a name, which is applied to a desired combination, is selected from among names (for example, pattern 1) that are applied to a plurality of combinations. The above-mentioned combinations of the correction processing are created on a set-up image plane for correction processing (not illustrated). And names are applied to the respective combinations. An operator operates the correction processing set up section 890 on the set-up image plane 800 in Fig. 8 to select a desired combination from among the above-mentioned plurality of combinations.

The set-up image plane 800 is further provided with an OK button 870 for instructing a decision of processing and a cancel button 880 for instructing a decision of the cancel of processing.

An operator designates a various type of profiles and a various types of processing to be carried out in the respective elements in accordance with the set-up image plane 800 and instructs a decision of processing through clicking the OK button 870 by the mouse 140. The respective designation contents are transmitted from the processing designation section 620 in Fig. 5 to the image recognition section 610. When the decision of processing is instructed, the page description language representative of page 300 is also transmitted to the image recognition section 610 (a step S2 in Fig. 7).

The image recognition section 610 recognizes the respective designation contents and the page description language, the image recognition section 610 recognizes the image object and the character object included in the page represented by the page description language (a step S3 in Fig. 7), and transmits the designation contents and the recognized image object to the first processing divergence section 630 and also transmits the designation contents and the recognized character object to the image developing section 680. In other words, of the page 300 shown in Fig. 6, the image object 310, the image object 320 and the image object 350 are transmitted to the first processing divergence section 630 in Fig. 5, while the character object 330, the character object 340 and the character object 360 are transmitted to the character conversion section 670.

In the event that the image object is transmitted to the first processing divergence section 630, the process goes from a step S4 to a step S5 in which the first processing divergence section 630 determines whether the image object use color processing, of the respective designation contents transmitted from the image recognition section, is the "processing for a preferable color".

In the event that as the image object use color processing, the "processing for a preferable color" is designated, the first processing divergence section 630 transmits the respective designation contents and the image object, which are transmitted from the image recognition section, to the first image analyzing section 640.

The first image analyzing section 640 first executes an estimation of the object such as a face and eyes of a person on the image object by pattern recognition for each image object transmitted (a step S6).

Next, the first image analyzing section 640 analyzes, on each image object, the ratio of the color components, and a distribution of areas of a light region and a dark region (a step S7).

The processing carried out by the steps S6 and S7 causes the first image analyzing section 640 to obtain characteristics of the tone of the color of an image object and information as to the scene such as what type of scene of image (for example, a person image, a landscape image, and an image photographed under the setting sun) is concerned with the image object. According to the example of Fig. 6, with respect to the image object 310 in Fig. 6, first, there is obtained characteristics of the tone of the color addressed as "tone of whitish image in its entirety". And next, there is obtained information as to such a scene that the image object 310 is "a landscape image of a mountain", since it is assumed that the objects of the image object 310 are "a mountain" and "a background". With respect to the image object 310 in Fig. 6, there are obtained characteristics of a tone of a color such as "a tone inclining to orange in its entirety" and information as to a scene addressed as "an image of a flower photographed under the setting sun". With respect to the image object 350 in Fig. 6, there are obtained characteristics of a tone of a color as to the image object 350 and information as to a scene addressed as "a person image photographed through a flash photography". The respective designation contents of processing, the image objects, characteristics of the tone of the color and information as to the scene are transmitted to the color correction section 650.

Upon receipt of the image objects, characteristics of the tone of the color and information as to the scene from the first image analyzing section 640, the color correction section 650 applies on each of the image objects color correction processing for correcting a tone of the color of the image object to a predetermined tone suitable for the scene of the image object (a step S8). This tone is a tone of a preferable color in printing. According to the example of Fig. 6, the image object 310 of Fig. 6 is corrected in color so that the tone of the color inclining to white in its entirety becomes a tone of a preferable color suitable to "a landscape image of a mountain", the image object 320 is corrected in color so that the tone of the color inclining to orange in its entirety becomes a tone of a preferable color suitable to "an image of a flower photographed under the setting sun", and the image object 350 is corrected in color so that the tone of the color becomes a tone of a preferable color suitable to "a person image photographed through a flash photography". The image objects subjected to the color correction processing, and the respective designation contents for processing are transmitted to the second processing divergence section 651.

The second processing divergence section 651 decides, as mentioned above, whether the execution of processing for the "red eye reduction processing", the "flaw erasing processing", the "hyper tone processing", the "hyper sharpness processing", and the "lens aberration correction processing", of the respective designation contents transmitted from the image recognition section, is designated (a step S9 in Fig. 7). In the event that the execution of the processing for at least one of those types of processing is designated, the second processing divergence section 651 transmits the designation contents of processing and the image object to the second image analyzing section 652.

The second image analyzing section 652 performs a detection of the red eye phenomena in the image object in the designation contents of the processing transmitted from the second processing divergence section 651, in the event that the execution of the "red eye reduction processing" is designated, and performs a detection of the flaw in the image object in the event that the execution of the "flaw erasing processing" is designated (a step S10 in Fig. 7). Hereinafter, there will be continued the explanation assuming that executions of both the "red eye reduction processing" and the "flaw erasing processing" are designated. According to the example of Fig. 6, the second image analyzing section 652 detects a "flaw" of an image in the image object 310 in Fig. 6, and detects the fact that "eyes of a person" in the image object 350 is in the red eye condition. Detection results of the inconvenience detected in those image objects, the image objects and the respective designation contents of processing are transmitted to the another correction section 653.

Upon receipt of the image objects, the detection results of the inconvenience and the respective designation contents of processing from the second image analyzing section 652, the another correction section 653 applies, as mentioned above, to the image objects the processing designated in execution of the "red eye reduction processing", the "flaw erasing processing", the "hyper tone processing", the "hyper sharpness processing", and the "lens aberration correction processing" (a step S11 in Fig. 7). Hereinafter, the explanation will be continued assuming that executions for those all types of processing are designated.

First, the another correction section 653 applies the above-mentioned "red eye reduction processing" to the image object in which eyes of a person are photographed in red. According to the example of Fig. 6, in the image object 350 of Fig. 6, the color of the eyes 351, which is regarded as red in accordance with the above-mentioned scene analysis, is corrected to be a preferable color.

The another correction section 653 applies the "flaw erasing processing" to the image object having the flaw. According to the example of Fig. 6, in the image object 310 of Fig. 6, the image portion of the periphery of the flaw 311 is copied on the image portion corresponding to the flaw 311, so that the flaw is erased.

The another correction section 653 applies to the respective image objects the "hyper tone processing" in which a background of the subject becomes light or dark, and "hyper sharpness processing" in which the outline of the subject becomes clear. For example, the image object 310 of Fig. 6 is an image photographed against the sun as mentioned above. It may often happen that such an image photographed against the sun involves an occurrence of a so-called white out on the background so that the background is unclear. The another correction section 653 applies the "hyper tone processing" to the image object 310 so that the image portion corresponding to the "background" estimated in the step S6 is dark and whereby the background is reproduced more clearly. The another correction section 653 makes the outline of the subject clear through the "hyper sharpness processing", so that an impression to look at the image is clear. Processing levels such as a degree of darkness of the image portion by the "hyper tone processing" and a degree of clearness of the outline of the subject by the "hyper sharpness processing" are set up by an operator beforehand as mentioned above.

The another correction section 653 applies to the respective image objects the "lens aberration correction processing" in which aberration due to the characteristic of an image taking lens is corrected. The another correction section 653 corrects both the distortion aberration and the color aberration. The lens characteristics used in the "lens aberration correction processing" are inputted by an operator beforehand, as mentioned above.

The image objects and the designation contents, which are subjected to the various types of image correction processing by the processing of the step S6 to the step S11 as mentioned above, are transmitted to the image conversion section 660.

While the above description explains a case where in the step S5, the "processing for a preferable color" is designated as the image object use color processing, and in the step S9, at least one of the "red eye reduction processing", the "flaw erasing processing", the "hyper tone processing", the "hyper sharpness processing", and the "lens aberration correction processing" is designated in execution, hereinafter, there will be explained the processing in cases different from the above-mentioned cases.

In the step S5, in a case where it is decided that the processing ("processing for faithfulness to look at" and "colorimetric processing") other than the "processing for a preferable color" is designated, the first processing divergence section 630 in Fig. 5 transmits the image objects and the designation contents to the second processing divergence section 651, and whereby the step S6 to the step S8 in Fig. 7 are omitted. Thus, the process goes from the step S5 to the step S9. In the step S9, when it is decided that all the types of processing of the "red eye reduction processing", the "flaw erasing processing", the "hyper tone processing", the "hyper sharpness processing", and the "lens aberration correction processing" are designated so as not to be executed, the second processing divergence section 651 in Fig. 5 transmits the image objects and the designation contents to the image conversion section 660, and whereby the step S10 to the step S11 in Fig. 7 are omitted. Thus, the process goes from the step S9 to the step S12. In this manner, for example, the use of the retouch makes it possible to implement high speed processing omitting the correction processing to be performed in the step S6 to the step S8 and the correction processing to be performed in the step S10 to the step S11 in the event that the image objects are already subjected to the various types of image correction processing.

The image conversion section 660 receives either one of the image object after the correction processing from the another correction section 653 and the image object before the correction from the second processing divergence section 651. The image conversion section 660 obtains the respective designation contents set up in the processing designation section 620 from the another correction section 653 or the second processing divergence section 651, and obtains information as to the scene on the image objects from the another correction section 653. When the image conversion section 660 obtains the image objects, image conversion section 660 applies to the image objects a predetermined processing determined for each image object use color processing in accordance with the designation of the image object use color processing ("processing for a preferable color", "processing for faithfulness to look at", and "colorimetric processing") transmitted from the image recognition section 610. In the event that the designation of the image object use color processing is concerned with the "processing for a preferable color", the image conversion section 660 applies such a processing that color of the image object becomes a preferable color suitable for the scene, for example, a "landscape of a mountain", which is indicated by information as to the scene of the image object. Further, the image conversion section 660 uses the profile for image use to convert image data representative of the image object into image data of a color space to meet the color printer 200 in Fig. 1 (a step S12 in Fig. 7). The image object based on the converted image data is transmitted to the image synthesizing section 675.

Here, there will be continued the explanation returning to the step S4 in Fig. 7. In the event that the object, which is recognized in the image recognition section 610, is the character object, the process goes from the step S4 to a step S13.

The image recognition section 610 transmits to the character conversion section 670 the recognized character object and the respective designation contents set up in the processing designation section 620. According to the present embodiment, the character object 330 and the character object 340 in the page 300 shown in Fig. 6 are transmitted to the character conversion section 670 shown in Fig. 5.

The character conversion section 670 applies, to the character objects transmitted from the image recognition section 610, a predetermined processing determined for each character object use color processing in accordance with the designation of the character object use color processing ("processing for a preferable color", and "colorimetric processing"). Further, the character conversion section 670 uses the profile for character use to convert character data representative of the character object into character data of a color space to meet the color printer 200 in Fig. 1 (a step S13 in Fig. 7). The character object based on the converted character data is transmitted to the image synthesizing section 675.

Upon receipt of the image objects from the image conversion section 660 and the character objects from the character conversion section 670, the image synthesizing section 675 creates page description language. representative of a page including those objects. The page description language created by the image synthesizing section 675 is transmitted to the image developing section 680. The image developing section 680 converts the page description language into the raster data using the printer and paper-use profile (a step S14 in Fig. 7). The raster data thus converted is transmitted via the output interface 119 in Fig. 3 to the color printer 200 in Fig. 1. The color printer 200 creates the output image 210 in accordance with the raster data.

In this manner, the RIP 101 analyzes characteristics of colors of the respective image objects and applies color correction processing suitable for the image objects. This feature makes it possible to create an output image constructed of images subjected to the color correction processing, at high speed, without necessity of complicated works.

Next, there will be explained a second embodiment of a data conversion apparatus of the present invention, and a second embodiment of a data conversion program stored in a data conversion program storage medium of the present invention, which causes a computer to operate as the second embodiment of the data conversion apparatus.

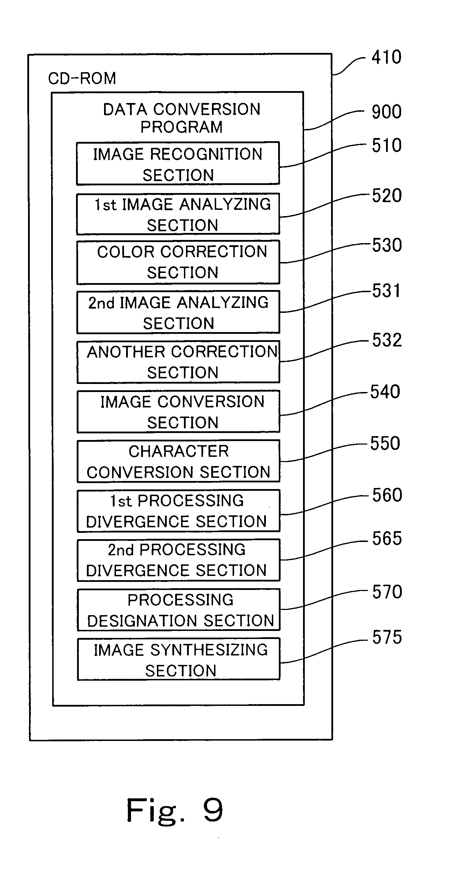

Fig. 9 is a conceptual view showing the CD-ROM 410 storing the second embodiment of a data conversion program stored in a data conversion program storage medium of the present invention.

A second data conversion program 900 is equivalent to one in which the image developing section 580 is removed from the first data conversion program 500 shown in Fig. 4. The second data conversion program 900 is the same as the first data conversion program 500 in the structure excepting the image developing section 580. In Fig. 9, the same reference numbers denotes the same parts as those of Fig. 4, and the redundant explanation will be omitted.

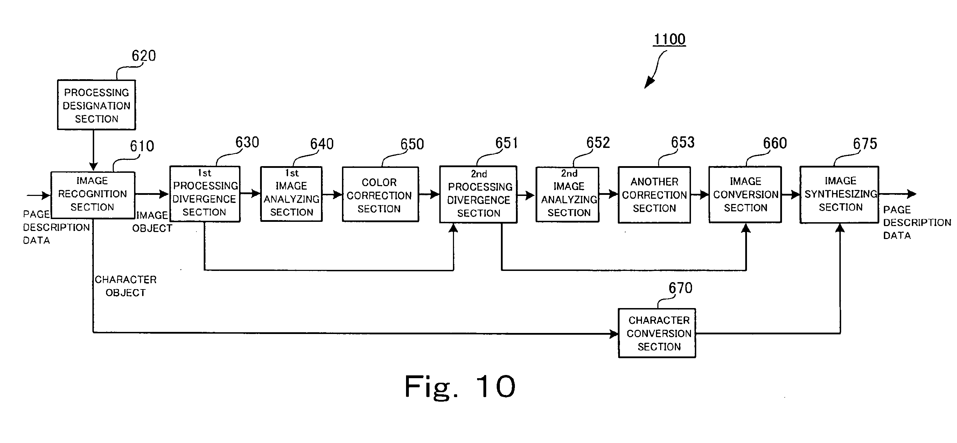

Fig. 10 is a functional block diagram of a data conversion apparatus 1101 in which the second data conversion program 900 is installed into the personal computer 100 shown in Fig. 1 so that the personal computer 100 is operated as the second embodiment of the data conversion apparatus of the present invention.

The data conversion apparatus 1100 shown in Fig. 10 is equivalent to one in which the image developing section 680 is removed from the RIP 101 shown in Fig. 5. The data conversion apparatus 1100 is the same as the RIP 101 in the structure excepting the image developing section 680. In Fig. 10, the same reference numbers denotes the same parts as those of Fig. 5, and the redundant explanation will be omitted.

According to the data conversion apparatus 1100, it is possible to create page description language representative of a page constructed of images subjected to the color correction processing, without necessity of complicated works. And it is possible to make use such that the page description language is transmitted to, for example, a plurality of types of image print systems each having a creating function of the raster data and outputting an image using a mutually different output profile, and the plurality of types of image print systems output images in parallel.

Explanation of the respective embodiments will be terminated with the above description.

While the above description explains an example in which a color printer is connected to the RIP, it is acceptable that a film printer is connected to the RIP.

While the above description explains an example in which as characteristics as to colors, characteristics of tone of colors are analyzed, it is acceptable that the image analyzing section referred to in the present invention analyzes characteristics as to colors other than tone of colors.

While the above description explains an example of a data conversion apparatus having the non-correction data creating section which is divided into two types of processing divergence sections and the image conversion section, any one is acceptable, as the non-correction data creating section referred to in the present invention, which is one or more elements for creating raster data without applying the color correction processing to the image objects in the event that a "designation of non-execution of image correction processing" is made.

While the above description explains an example of a data conversion apparatus having a data conversion section serving as both the after correction-data creating section and the non-correction data creating section, it is acceptable that the data conversion apparatus of the present invention is individually provided with the after correction-data creating section and the non-correction data creating section.

As mentioned above, according to the present invention, it is possible to reduce a trouble for creating images subjected to image correction processing such as color correction processing.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. A data conversion apparatus comprising:
an image recognition section that recognizes individual images in a page represented by page description language describing the page including images, characters, and figures;
an image analyzing section that performs an image analysis to extract features on individual images recognized by the image recognition section; and
an image correction section that applies an image correction processing according to an analysis result analyzed by the image analyzing section to an associated image of the page.

2. A data conversion apparatus according to claim 1, wherein the data conversion apparatus further comprises an after correction-data creating section that creates raster data representative of the page of which images are subjected to the image correction processing.

3. A data conversion apparatus according to claim 2, wherein the data conversion apparatus further comprises:
a processing designation section that selectively designates whether the image correction processing is carried out; and
a non-correction data creating section that creates raster data representative of the page represented by the page description language, instead of a series of processing by the image analyzing section, the image correction section, and the after correction-data creating section, in the event that the processing designation section designates that the image correction processing is not carried out.

4. A data conversion apparatus according to claim 1, wherein the image analyzing section analyzes characteristics as to colors on the individual images recognized by the image recognition section, and
the image correction section applies a color correction processing according to the characteristics analyzed by the image analyzing section to an associated image of the page.

5. A data conversion apparatus according to claim 4, wherein the image analyzing section analyzes, as the characteristics as to colors, characteristics of tones of colors of images, and
the image correction section applies a tone correction processing according to the characteristics analyzed by the image analyzing section to an image.

6. A data conversion apparatus according to claim 1, wherein the image analyzing section performs a scene analysis to recognize the 'situation' and/or 'intention' of the images on the individual images recognized by the image recognition section, and
the image correction section applies an image correction processing by converting an image to the most suitable form according to the 'situation' and/or 'intention' recognized by the image analyzing section to images of the 'situation' and/or 'intention' in the page on the individual images recognized by the image recognition section.

7. A data conversion apparatus according to claim 1, wherein the image analyzing section detects a predetermined inconvenience on the individual images recognized by the image recognition section, and
the image correction section applies an image correction processing for correcting the inconvenience detected by the image analyzing section to images involved in the inconvenience in the page on the individual images recognized by the image recognition section.

8. A data conversion program storage medium storing a data conversion program which causes a computer to operate as a data conversion apparatus, when the data conversion program is incorporated into the computer, the data conversion apparatus comprising:
an image recognition section that recognizes images of a page represented by page description language describing the page including images and/or characters;
an image analyzing section that performs a predetermined image analysis on individual images recognized by the image recognition section; and
an image correction section that applies an image correction processing according to an analysis result analyzed by the image analyzing section to an associated image of the page.
